# EUROPEAN PATENT SPECIFICATION

(11) **EP 2 196 989 B1**
(45) Date of publication and mention of the grant of the patent: **27.06.2012**
(21) Application number: 08021450.5
(22) Date of filing: 10.12.2008
(51) Int. Cl.: G10L 15/18, G10L 15/22

(54) **Grammar and template-based speech recognition of spoken utterances**
Spracherkennung aus Grammatiken und Mustern
reconnaissance de la parole basée sur des grammaires et des modèles

(43) Date of publication of application: 16.06.2010
(73) Proprietor: Nuance Communications, Inc., Burlington, MA 01803-4613 (US)
(72) Inventor: Gruhn, Rainer, 89079 Ulm (DE); Hamerich, Stefan, 89073 Ulm (DE)
(74) Representative: Grünecker, Kinkeldey, Stockmair & Schwanhäusser

(56) References cited:
- EP-A- 1 482 479
- US-B1- 7 369 988

## Description

### Field of Invention

The present invention relates to the art of automatic speech recognition and, in particular, recognition of spoken utterances in speech-to-text systems allowing a user the dictation of texts as E-Mails and SMS messages.

### Background of the Invention

The human voice can probably be considered as the most natural and comfortable man-computer interface. Voice input provides the advantages of hands-free operation, thereby, e.g., providing access for physically challenged users or users that are using there hands for different operation, e.g., driving a car. Thus, computer users for a long time desired software applications that can be operated by verbal utterances. In particular, communication with remote parties by means of electronic mail, SMS, etc. can be realized by spoken utterances that have to be recognized in transformed into text that eventually is sent to a remote party.

For example, navigation systems in vehicles become increasingly prevalent. Usually on board navigation computer systems analyze the combined data provided by GPS (Global Positioning System), motion sensors as ABS wheel sensors as well as a digital map and thereby determine the current position and velocity of a vehicle with increasing preciseness. The vehicle navigation systems may also be equipped to receive and process broadcasted information as, e.g., the traffic information provided by radio stations, and also to send emails, etc. to a remote party.

Besides acoustic communication by verbal utterances text messages sent by means of the Short Message Service (SMS) employed by cell phones are very popular. However, in particular, the driver of a vehicle is not able to send an SMS message by typing the text message by means of the relatively tiny keyboard of a standard cell phone. Even if the driver can use a larger keyboard when, e.g., the cell phone is inserted in an appropriate hands-free set or when the vehicle communication system is provided with a touch screen or a similar device, manually editing a text that is intended to be sent to a remote communication party would distract the driver's attention from steering the vehicle. Therefore, writing an E-Mail or an SMS would result in some threat to the driving safety, in particular, in heavy traffic.

There is, therefore, a need to provide passengers in vehicles, in particular, in automobiles, with an improved alternative kind of communication, in particular, communication with a remote party during a travel by means of text messages generated from verbal utterances from a user during a travel with the automobile.

Present-day speech recognition systems usually make use of a concatenation of allophones that constitute a linguistic word. The allophones are typically represented by Hidden Markov Models (HMM) that are characterized by a sequence of states each of which has a well-defined transition probability. In order to recognize a spoken word, the systems have to compute the most likely sequence of states through the HMM. This calculation is usually performed by means of the Viterbi algorithm, which iteratively determines the most likely path through the associated trellis.

Speech recognizing systems conventionally choose the guess for an orthographic representation of a spoken word or sentence that corresponds to sampled acoustic signals from a finite vocabulary of words that can be recognized and are stored, for example, as data/vocabulary lists. In the art comparison of words recognized by the recognizer and words of a lexical list usually take into account the probability of mistaking one word, e.g. a phoneme, for another.
In US 7 369 988 B1 a method for voice enabled text entry is described wherein a transient grammar set is created upon entry of a first user entry that may correspond to a set of text strings that are predictive of a desired text string. After the transient grammar set is generated a second user entry is received that indicates a selection of the transient grammar set and the second user entry is matched with that selection.
In EP 1 482 479 A1 the employment of a language model for speech recognition is described.

The above-mentioned vocabulary lists become readily very long for practical applications. Consequently, conventional search processes can take an unacceptable long time. Particularly, due to the relatively limited computational resources available in embedded systems, as vehicle communication system and vehicle navigation systems, for example, reliable automated speech recognition of verbal utterances poses a complex technical problem. It is therefore a goal to be achieved with the present invention to provide speech recognition of verbal utterances for speech-to-text applications that allow efficient and reliable recognition results and communication with a remote party by text messages even if only limited computational resources are available.

### Description of the Invention

In view of the above, the present invention provides a communication system according to claim 1. The claimed communication system comprises
a database comprising classes of speech templates, in particular, classified according to a predetermined grammar;
an input means configured to receive and to digitize speech signals corresponding to a spoken utterance;
a speech recognition means configured to receive and recognize the digitized speech signals; and wherein
the speech recognition means is configured to prompt the user to define a particular context of communication, wherein the context of communication represents one of a plurality of contexts frequently used in speech-to-text applications, and to utter a keyword before reception of the digitized speech signals corresponding to the spoken utterance and wherein the speech recognition means is configured to recognize the keyword and to select a predetermined grammatical structure of the spoken utterance in reaction to the recognized keyword and to recognize the digitized speech signals based on speech templates stored in the database and the expected predetermined grammatical structure.

The input means may comprise a speech input and/or a telephone unit and/or a connector to a cell phone and/or a Bluetooth connector and/or a WLAN connector. The communication system may further comprise or be connected to a text message generating means configured to generate a text message based on the recognition of the digitized speech signals. The text message may be generated as an SMS message, an EMS message, an MMS message or an E-Mail, for example.

The speech signals are obtained by means of one or more microphones, for example, installed in a passenger compartment of a vehicle and configured to detect verbal utterances of the passengers. Advantageously, different microphones are installed in the vehicle and located in the vicinities of the respective passenger seats. Microphone arrays may be employed including one or more directional microphones in order to increase the quality of the microphone signal (comprising the wanted speech but also background noise) which after digitization is to be processed further by the speech recognition means.

In principle, the speech recognition means can be configured to recognize the digitized speech signals on a letter-by-letter and/or word-by-word basis. Whereas in the letter-by-letter mode the user is expected to spell a word letter-by-letter, in the word-by-word mode pauses after each spoken word are required. The letter-by-letter mode is relatively uncomfortable but reliable. Moreover, it may be preferred to employ recognition of the digitized speech signals sentence-by-sentence.

It may also be foreseen that probability estimates or other reliability evaluations of the recognition results are assigned to the recognition results that may, e.g., be generated in form of N-best lists comprising candidate words. If the reliability evaluations for one employed speech recognition mode fall below a predetermined threshold the recognition process may be repeated by a different mode and/or the may be prompted to repeat an utterance.

The digitized speech signals are analyzed for the recognition process. For this recognition process, feature (characteristic) vectors comprising feature parameters may be extracted and spectral envelopes, formants, the pitch and short-time power spectrum, etc., may be determined in order to facilitate speech recognition, in principle.

The guess for an orthographic representation of a spoken word or sentence that corresponds to sampled acoustic signals is chosen from a finite vocabulary of words that can be recognized and is structured according to the classes of templates stored in the database, for example, in form of a data list for each class, respectively. The speech templates may represent parts of sentences or even complete sentences typically used in E-Mails, SMS messages, etc.

A text message can be generated on the basis of the recognition result. The text generating means may be incorporated in the speech recognition means and does not necessarily represent a separate physical unit. The text message generated by the text message generating means on the basis of the recognition result obtained by the speech recognition means can be encoded as an SMS (Short Message Service) message, an EMS (Enhanced Message Service), an MMS (Multimedia Message Service) message or an E-Mail comprising, e.g., ASCII text or another plain text or a richer format text. Encoding as an EMS message allows for a great variety of appended data files to be sent together with the generated text message.

According to the present invention, operation of the communication system for the transmission of a text message does not require any text input by the user. In particular, the driver of a vehicle is, thus, enabled to send a text message to a remote party without typing in any characters. Safety and comfort are, therefore, improved as compared to systems of the art that require haptic inputs by touch screens, keyboards, etc.

It is essential for the present invention that the recognition process is based on a predetermined grammatical structure of some predetermined grammar. The speech samples may be classified according to the grammar. Recognition based on the predetermined grammatical structure, necessarily, implies that a user is expected to obey a grammatical structure of the predetermined grammar when performing verbal/spoken utterances that are to be recognized. It is the combined grammar and template approach that facilitates recognition of spoken utterances and subsequent speech-to-text processing and transmitting of text messages in embedded systems or cellular phones, for example.

Herein, by grammatical structure a sequence of words of particular grammatical functions, clause constituents, is meant. Thus, speech recognition is performed for a predetermined sequence of words corresponding to speech samples of different classes stored in the database. The grammatical structure may be constituted by a relatively small limited number of words, say less than 10 words. To give a particular example in more detail, a user is expected to sequentially utter a subject noun, a predicate (verb) and an object noun. This sequence of words of different grammatical functions (subject noun, verb, object noun) represents a predetermined grammatical structure of a predetermined grammar, e.g., the English, French or German grammar. A plurality of grammatical structures can be provided for a variety of applications (see description below) and used for the recognition process.

The automated speech recognition process is, thus, performed by matching each word of a spoken utterance only with a limited subset of the entirety of the stored templates, namely, in accordance with the predetermined grammatical structure. Therefore, the reliability of the recognition process is significantly enhanced, particularly, if only limited computational resources are available, since only limited comparative operations have to be performed and only for respective classes of speech templates that fit to the respective spoken word under consideration for speech recognition. Consequently, the speech recognition process is fastened and less error-prone as compared to conventional recognition systems/methods employed in present-day communication systems.

In particular, the user can be expected to utter a sequence of words in a particular context. More particularly the user may be asked by the communication system about the context, e.g., by a displayed text message or synthesized speech output. The above-mentioned subject noun, the predicate and the object noun, for example, are recognized by templates classified in their respective classes dependent on the previously given context/application. Moreover, a set of alternative grammatical structures may be provided (and stored in a database to be used for the recognition process) for a particular context, e.g., according to a sequence of several template sentences by which a user can compose complex SMS messages as

"I am in the car. I will arrive at home. I love you. 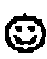 "

As shown in this example, the templates, in general, may also include emoticons.

The communication system may also be configured to prompt a warning or a repeat command, if no speech sample is identified to match the digitized speech signal with some confidence measure exceeding a predetermined confidence threshold.

Consider a case in that a user is willing to send an E-Mail to a remote communication party in which he wants to indicate the expected arrival time at a particular destination. In this case, he would utter a keyword, "Arrival time", thereby initiating speech recognition based on templates that may be classified in a corresponding class stored in the database. The speech recognition means may be configured to expect: Subject noun for the party (usually including the user) who is expected to arrive at some expectation time, predicate specifying the way of arriving (e.g., "come/coming", "arrive/arriving", 'land/landing", "enter/entering port", etc.) and object noun (city, street address, etc.), followed by the time specification (date, hours, temporal adverbs line "early", "late", etc.).

It is noted that a large variety of contexts/applications shall be provided in order to allow for reliable recognition of different kinds of dictations. The grammatical structures shall mirror/represent contexts/applications frequently used in E-Mails, SMS messages, etc., i.e. contexts related to common communication schemes related to appointments, spatial and temporal information, etc. Such contexts usually show particular grammatical structures in E-Mails, SMS messages, etc., and these grammatical structures are provided for the speech recognition process.

In particular, the communication system of the present invention may be configured to to prompt the user to input, by verbal utterances, a sequence of a predetermined number of words at least partly of different grammatical functions in a predetermined order and wherein the speech recognition means is configured to recognize the digitized speech signals corresponding to the sequence of words in the predetermined order.

Different from conventional speech recognition means that are configured to recognize an arbitrary sequence of words, according to this example of the invention a predetermined order of a predetermined number of words only that is input by verbal utterances is considered for the recognition process. Moreover, elements of the grammatical structures provided for the speech recognition and, e.g., stored in a database of the communication system, can be considered as placeholders to be filled with the words actually uttered by the user.

The reliability of the speech recognition process, thereby, is further enhanced, since the variety of expected/possible speech inputs is significantly reduced. It might also be preferred to provide the opportunity that an unexpected input word (of an unexpected grammatical form, i.e. being an unexpected clauses constituent) and/or failure of recognition of a word being part of an utterance results in a warning output of the communication system (displayed on a display means and/or output by synthesized speech) and/or in intervention by the communication system, for example, in form of a speech dialog.

Moreover, the communication system may be configured to prompt the user to define a particular context and, in this case, the speech recognition means is configured to recognize the digitized speech signals (utterances spoken by the user) based on the defined particular context.

In the above example, prompts can be given by the communication system by simply waiting for an input, by displaying some sign (of the type of a "blanking cursor", for example), by an appropriate synthesized speech output, by displaying a message, etc. The prompt may even include announcement of the grammatical function of an expected utterance in accordance with the grammatical structure. In fact, the expected grammatical structure may be displayed in form of a display of the expected grammatical function of the words of a sequence of words according to the grammatical structure (e.g., "Noun" - "verb" - "Object") Hereby, success of the recognition process is even further facilitated albeit at the cost of comfort and smoothness of the dictation process.

The communication system provided herein is of particular utility for navigation systems installed in vehicles, as for example, automobiles. Moreover, cellular phones can advantageously make use of the present invention and, thus, a cellular phone comprising a communication system according to one of the preceding examples is provided.

The present invention further provides a method for speech recognition of spoken utterances, comprising
providing classes of speech templates, in particular, classified according to a predetermined grammar;
prompting a user to define a particular context of communication, wherein the context of communication represents one of a plurality of contexts frequently used in speech-to-text applications, and to utter a keyword before reception of the digitized speech signals corresponding to the spoken utterance; and
recognizing the keyword and recognizing the speech signals based on provided speech templates and the predetermined grammatical structure selected in reaction of the recognized keyword.
obtaining speech signals corresponding to a spoken utterance.

In the above-mentioned example of the method the speech templates can advantageously be classified according to their grammatical functions (classes of clause constituents) and/or contexts of communication. The contexts may be given in form of typical communication contexts of relevance in E-Mail or SMS communication. Provision of context dependent grammatical structures may be based on an analysis of a pool of real-world E-Mails or SMS messages, etc., in order to provide appropriate grammatical structures for common contexts (e.g., informing on appointments, locations, invitations, etc.).

Furthermore, it is provided a method for transmitting a text message comprising the steps of one of the examples of the method for speech recognition, and further comprising the steps of generating a text message based on the recognition result and transmitting the text message to a receiving party. Transmission is preferably performed in a wireless manner, e.g., via WLAN or conventional radio broadcast.

The method for transmitting a text message, may further comprise displaying at least part of the text message on a display means and/or outputting a synthesized speech signal based on the text message and prompting a user to acknowledge the text message displayed on the display means and/or the output synthesized speech signal. In this case, the step of transmitting the text message is performed in response to a predetermined user's input in response to the displayed text message and/or the output synthesized speech signal.

Additional features and advantages of the present invention will be described with reference to the drawing. In the description, reference is made to the accompanying figures that are meant to illustrate examples of the invention. It is understood that such examples do not represent the full scope of the invention.

Figure 1 shows a flow diagram illustrating an example of the method of transmitting a text message according to the invention.

Figure 2 illustrates an example for the template based speech recognition according to the invention.

The present invention can, for example, be incorporated in a vehicle navigation system or another in-car device that may be coupled with a cellular phone allowing for communication with a remote party via E-Mail, SMS messages, etc. A vehicle navigation system configured according to present invention comprises a speech input means and a speech recognition means. The speech input means is used to receive a speech signal detected by one or more microphones installed in a vehicular cabin and to generate a digitized speech signal based on the detected speech signal. The speech recognition means is configured to analyze the digitized speech signal for recognition. For the analyzing process feature vectors comprising characteristic parameters as cepstral coefficients may be deduced from the digitized speech signal.

The speech recognition means has access to a speech database in which speech samples are stored. Comparison of the analyzed speech signal with speech samples stored in the speech database is performed by the speech recognition means. The best fitting speech sample is determined and the corresponding text message is generated from the speech samples and transmitted to a remote party.

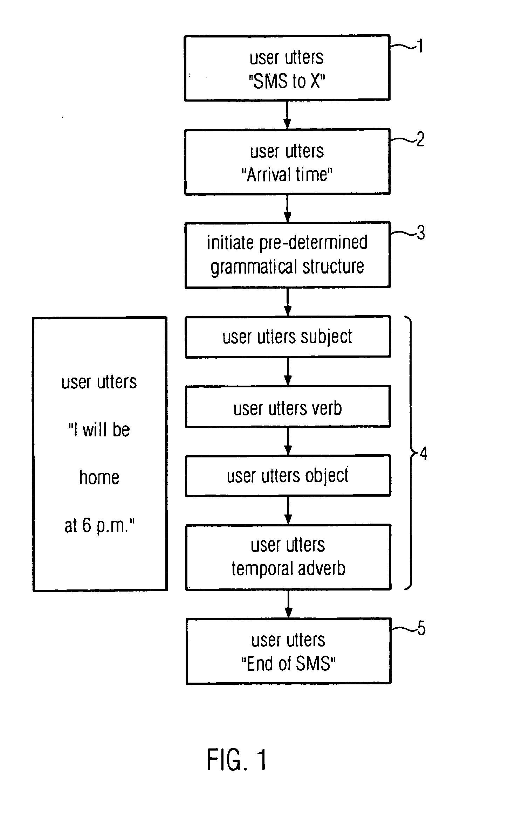

With reference to Figure 1, consider an example in that a user of the navigation system, e.g., a driver of the vehicle in which the vehicle navigation system is installed, may intend to send an SMS message to another person (named X in the present example). He utters the keyword "SMS" followed by the addressee 1. Thereby, an SMS transmission function and, in particular, processing for speech recognition of utterances that are to be translated to a text massage that can be transmitted is initiated. In particular, the phone number of X will be looked up in a corresponding telephone list. Alternatively, dictation of an E-Mail cold be announced by the utterance "E-Mail to X" and the corresponding E-Mail address may be automatically looked up.

It may be preferred that activation of the speech recognition means is performed by the utterance of a keyword. In this case, the system has to be in a stand-by mode, i.e. the microphone and the speech input means are active. The speech input means in this case may recognize the main keyword for activating the speech recognition means by itself without the help of an actual recognizing process and a speech database, since the main keyword should be chosen to be very distinct and the digital data representation thereof can, e.g., be permanently hold in the main memory.

Next, the user utters 2 another keyword, namely, "Arrival time". According to the present example, the speech recognition means is configured to expect a particular predetermined grammatical structure of the following utterances that are to be recognized in reaction of the recognition of the keyword "Arrival time", i.e. a particular one of a set of predetermined grammatical structures is initiated 3 that is to be observed by the user to achieve correct recognition results. For example, the predetermined grammatical structure to be observed by the user after utterance of the keyword "Arrival time" is the following: 'Subject' followed by 'verb' followed by 'object' followed by 'temporal adverb'.

The user may utter 4 "1 will be home at 6 p.m.". This spoken sentence will be recognized by means of a set of speech templates looked-up by the speech recognition means. The users concludes 5 the text of the SMS message by the keyphrase "End of SMS". It is noted that the user may utter the whole sentence "I come home at 7 p.m" without any pauses between the individual words. Recognition of the entire sentence is performed on the basis of the speech templates provided for the words of the sentence.

It is noted that the user's utterances are detected by one or more microphones and digitized and analyzed for speech recognition. The speech recognition means may work on a word-by-word basis and by comparison of each analyzed word with the speech samples classified according to the grammatical structure and the templates stored in the speech database. Accordingly, a text message is generated from stored speech samples that are identified by the speech recognition means to correspond to each word of the drivers utterance, respectively.

After the user's utterances have been recognized by the speech recognition means the navigation system or other in-car device may output a synthesized verbal utterance, e.g., "Text of SMS (E-Mail): I come home at 7 p.m". Alternatively or additionally, the recognized text may be displayed to the user on some display device. Thus, the driver can verify the recognized text, e.g., by utterance of the keyword "Correct". The generated text message can subsequently be passed to a transmitting means for transmission to a remote communication party, i.e. in the present case, to a person named X.

Whereas in the above-described example the present invention is described to be incorporated in a vehicle navigation system, it can, in fact, be incorporated in any communication system comprising a speech recognition means. In particular, the present invention can be incorporated in a cellular phone, a Personal Digital Assistant (PDA), etc.

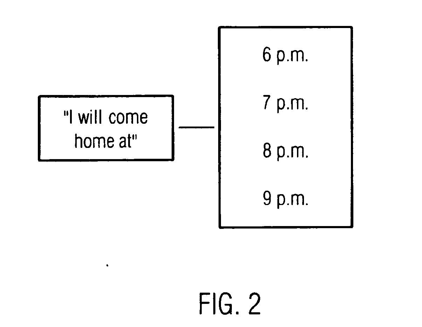

It is an essential feature of the present invention that the automated recognition of a user's utterances is based on speech templates. Parts of typical sentences of E-Mails, for example, are represented by the templates. Figure 2 shows an example in that a speaker has uttered the incomplete sentence "I will come home at". After a pause after the preposition "at" he is expected to specify the time of arrival at home. According to this example, a speech recognition means incorporating the present invention will expect the time of day of the arrival of the user. It might be configured to prompt a warning or a repeat command in the case the user's utterance cannot be recognized as a time of day.

Alternatively to the shown example, the user may be expected to finish an incomplete sentence "I will come home" by "at 7 p.m." or "at 8 p.m.", etc. In any case, a speech recognition means incorporating the present invention will recognize the utterance completing the sentence, i.e. "7 p.m." or "at 7 p.m.", for example, based on speech templates that represent such standard phrases commonly used in E-Mails, SMS messages, etc. It should be noted that, in general, these speech templates may represent parts of sentences or even complete sentences.

## Claims

1. A communication system, comprising
a database comprising classes of speech templates, classified according to a predetermined grammar;
an input means configured to receive and to digitize speech signals corresponding to a spoken utterance;
a speech recognition means configured to receive and recognize the digitized speech signals; and
wherein the communication system is configured to prompt the user to define a particular context of communication, wherein the context of communication represents one of a plurality of contexts frequently used in speech-to-text applications, by uttering a keyword before reception of the digitized speech signals corresponding to the spoken utterance and wherein the speech recognition means is configured to recognize the keyword and to select a predetermined grammatical structure of the spoken utterance in reaction to the recognized keyword and to recognize the digitized speech signals based on speech templates stored in the database and the expected predetermined grammatical structure.

2. The communication system according to claim 1, further comprising a text message generating means configured to generate a text message based on the recognition of the digitized speech signals.

3. The communication system according to one of the preceding claims, wherein the speech templates are classified according to their grammatical functions and/or contexts of communication.

4. The communication system according to one of the preceding claims, wherein the input means comprises a speech input and/or a telephone unit and/or a connector to a cell phone and/or a Bluetooth connector and/or a WLAN connector.

5. The communication system according to one of the claims 2 to 4, wherein the text message generating means is configured to generate the text message as an SMS message, an EMS message, an MMS message or an E-Mail.

6. Vehicle navigation system installed in a vehicle, in particular, an automobile, comprising the communication system according to one of the preceding claims.

7. Cellular phone comprising the communication system according to one of the preceding claims.

8. Method for speech recognition of spoken utterances, comprising
providing classes of speech templates classified according to a predetermined grammar;
obtaining speech signals corresponding to a spoken utterance;
prompting a user to define a particular context of communication, wherein the context of communication represents one of a plurality of contexts frequently used in speech-to-text applications, by uttering a keyword before reception of the digitized speech signals corresponding to the spoken utterance; and
recognizing the keyword and recognizing the speech signals based on provided speech templates and the predetermined grammatical structure selected in reaction of the recognized keyword.

9. The method according to claim 8, wherein the speech templates are classified according to their grammatical functions and/or contexts of communication.

10. Method for transmitting a text message comprising the steps of the method for speech recognition according to claim 8 or 9, and further comprising the steps of generating a text message based on the recognition result and transmitting the text message to a receiver.

11. Method according to claim 10, further comprising
displaying at least part of the text message on a display means and/or outputting a synthesized speech signal based on the text message and prompting a user to acknowledge the text message displayed on the display means and/or the output synthesized speech signal; and wherein
transmitting of the text message is performed in response to a predetermined user's input in response to the displayed text message and/or the output synthesized speech signal.

12. Computer program product, comprising one or more computer readable media having computer-executable instructions for performing one or more of the steps of the method according to one of the Claims 8 - 11.

## Patentansprüche

1. Ein Kommunikationssystem, umfassend
eine Datenbank, die Klassen von Sprachproben umfasst, die gemäß einer vorbestimmten Grammatik klassifiziert sind;
eine Eingangseinrichtung, die dazu ausgebildet ist, Sprachsignale entsprechend einer gesprochenen Äußerung zu empfangen und zu digitalisieren;
eine Spracherkennungseinrichtung, die dazu ausgebildet ist, die digitalisierten Sprachsignale zu empfangen und erkennen; und
wobei das Kommunikationssystem dazu ausgebildet ist, den Nutzer aufzufordern, einen bestimmten Kommunikationskontext durch Aussprechen eines Kennwortes vor dem Empfang der digitalisierten Sprachsignale entsprechend der gesprochenen Äußerung zu definieren, wobei der Kommunikationskontext einen von einer Mehrzahl von Kontexten darstellt, die in Sprache-zu-Text-Anwendungen häufig verwendet werden, und wobei die Spracherkennungseinrichtung dazu ausgebildet ist, das Kennwort zu erkennen und eine vorbestimmte grammatische Struktur der gesprochenen Äußerung in Reaktion auf das erkannte Kennwort auszuwählen und die digitalisierten Sprachsignale auf der Grundlage der Sprachproben, die in der Datenbank gespeichert sind, und der erwarteten vorbestimmten grammatischen Struktur zu erkennen.

2. Das Kommunikationssystem gemäß Anspruch 2, das weiterhin eine Einrichtung zur Erzeugung einer Textnachricht umfasst, die dazu ausgebildet ist, eine Textnachricht auf der Grundlage der Erkennung der digitalisierten Sprachsignale zu erzeugen.

3. Das Kommunikationssystem gemäß einem der vorhergehenden Ansprüche, in dem die Sprachproben gemäß ihrer grammatischen Funktionen und/oder Kommunikationskontexte klassifiziert sind.

4. Das Kommunikationssystem gemäß einem der vorhergehenden Ansprüche, in dem die Eingangseinrichtung einen Spracheingang und/oder eine Telefoneinheit und/oder eine Verbindungseinrichtung zu einem Mobiltelefon und/oder eine Bluetooth-Verbindungseinrichtung und/oder eine WLAN-Verbindungseinrichtung umfasst.

5. Das Kommunikationssystem gemäß einem der Ansprüche 2 bis 4, in dem die Einrichtung zur Erzeugung einer Textnachricht dazu ausgebildet ist, die Textnachricht als eine SMS-Nachricht, eine EMS-Nachricht, eine MMS-Nachricht oder eine E-Mail zu erzeugen.

6. Fahrzeugnavigationssystem, das in einem Fahrzeug, insbesondere in einem Auto, installiert ist, das das Kommunikationssystem gemäß einem der vorhergehenden Ansprüche umfasst.

7. Mobiltelefon, das das Kommunikationssystem gemäß einem der vorhergehenden Ansprüche umfasst.

8. Verfahren zur Spracherkennung von gesprochenen Äußerungen, das umfasst
Bereitstellen von Klassen von Sprachproben, die gemäß einer vorbestimmten Grammatik klassifiziert sind;
Erhalten von Sprachsignalen entsprechend einer gesprochenen Äußerung;
Auffordern eines Nutzers dazu, einen bestimmten Kommunikationskontext vor dem Empfang der digitalisierten Sprachsignale entsprechend der gesprochenen Äußerung durch
Aussprechen eines Kennwortes zu definieren, wobei der Kommunikationskontext einen von einer Mehrzahl von Kontexten darstellt, die in Sprache-zu-Text-Anwendungen häufig verwendet werden; und
Erkennen des Kennwortes und Erkennen der Sprachsignale auf der Grundlage der bereitgestellten Sprachproben und der vorbestimmtem grammatischen Struktur, die in Reaktion auf das erkannte Kennwort ausgewählt wird.

9. Das Verfahren gemäß Anspruch 8, in dem die Sprachproben gemäß ihrer grammatischen Funktionen und/oder Kommunikationskontexte klassifiziert sind.

10. Verfahren zum Senden einer Textnachricht, das die Schritte des Verfahrens zur Spracherkennung gemäß Anspruch 8 oder 9 umfasst, und weiterhin die Schritte des Erzeugens einer Textnachricht auf der Grundlage des Erkennungsergebnisses und Senden der Textnachricht an einen Empfänger umfassend.

11. Verfahren gemäß Anspruch 10, das weiterhin umfasst
Anzeigen zumindest eines Teils der Textnachricht auf einer Anzeigeeinrichtung und/oder Ausgeben eines synthetisierten Sprachsignals auf der Grundlage der Textnachricht und Auffordern eines Nutzers, die Textnachricht, die auf der Anzeigeeinrichtung angezeigt ist, und/oder das ausgegebene synthetisierte Sprachsignal zu bestätigen; und wobei
Senden der Textnachricht in Reaktion auf eine vorbestimmte Nutzereingabe in Reaktion auf die angezeigte Textnachricht und/oder das ausgegebene synthetisierte Sprachsignal ausgeführt wird.

12. Computerprogrammprodukt, das ein oder mehrere computerlesbare Medien umfasst, die von einem Computer ausführbare Anweisungen zum Ausführen eines oder mehrerer der Schritte des Verfahrens gemäß einem der Ansprüche 8 - 11 aufweisen.

## Revendications

1. Système de communication, comprenant :
une base de données comprenant des classes de modèles de parole, classées en fonction d'une grammaire prédéterminée,
un moyen d'entrée, configuré pour recevoir et pour numériser des signaux de parole correspondant à une énonciation parlée,
un moyen de reconnaissance de la parole, configuré pour recevoir et reconnaître les signaux numérisés de parole, et
dans lequel le système de communication est configuré pour inviter l'utilisateur à définir un contexte particulier de communication, dans lequel le contexte de communication représente l'un d'une pluralité de contextes fréquemment utilisés dans des applications de la parole vers le texte, en énonçant un mot-clé avant la réception des signaux numérisés de parole correspondant à l'énonciation parlée, et dans lequel le moyen de reconnaissance de la parole est configuré pour reconnaître le mot-clé et pour sélectionner une structure grammaticale prédéterminée de l'énonciation parlée en réaction au mot-clé reconnu ainsi que pour reconnaître les signaux numérisés de parole sur la base de modèles de la parole stockés dans la base de données et de la structure grammaticale prédéterminée attendue.

2. Système de communication selon la revendication 1, comprenant en outre un moyen de génération de message textuel configuré pour générer un message textuel sur la base de la reconnaissance des signaux numérisés de parole.

3. Système de communication selon l'une des revendications précédentes, dans lequel les modèles de parole sont classés conformément à leurs fonctions grammaticales et/ou à des contextes de communication.

4. Système de communication selon l'une des revendications précédentes, dans lequel le moyen d'entrée comprend une entrée pour la parole et/ou une unité téléphonique et/ou un connecteur vers un téléphone cellulaire et/ou un connecteur Bluetooth et/ou un connecteur de réseau local WLAN.

5. Système de communication selon l'une des revendications 2 à 4, dans lequel le moyen de génération de message textuel est configuré pour générer le message textuel sous forme d'un message de type SMS, d'un message de type EMS, d'un message de type MMS ou d'un message électronique.

6. Système de navigation de véhicule installé dans un véhicule, en particulier une automobile, comprenant le système de communication conforme à l'une des revendications précédentes.

7. Téléphone cellulaire comprenant le système de communication conforme à l'une des revendications précédentes.

8. Procédé de reconnaissance de la parole d'énonciations parlées, comprenant
la fourniture de classes de modèles de parole classées en fonction d'une grammaire prédéterminée,
la récupération de signaux de parole correspondant à une énonciation parlée,
l'invitation faite à un utilisateur de définir un contexte particulier de communication, dans lequel le contexte de communication représente l'un d'une pluralité de contextes fréquemment utilisés dans des applications de la parole vers le texte, en énonçant un mot-clé avant la réception des signaux numérisés de parole correspondant à l'énonciation parlée, et
la reconnaissance du mot-clé et la reconnaissance des signaux de parole, sur la base de modèles fournis de la parole, et de la structure grammaticale prédéterminée sélectionnée par réaction avec le mot-clé reconnu.

9. Procédé selon la revendication 8, dans lequel les modèles de parole sont classés conformément à leurs fonctions grammaticales et/ou à des contextes de communication.

10. Procédé permettant de transmettre un message textuel comprenant les étapes du procédé de reconnaissance de la parole conforme aux revendications 8 ou 9, et comprenant en outre les étapes consistant à générer un message textuel fondé sur le résultat de reconnaissance, ainsi qu'à transmettre le message textuel à un récepteur.

11. Procédé selon la revendication 10, comprenant en outre
l'affichage d'au moins une partie du message textuel sur un moyen d'affichage et/ou la fourniture en sortie d'un signal synthétisé de parole fondé sur le message textuel, ainsi que l'invite faite à un utilisateur d'accuser réception du message textuel affiché sur le moyen d'affichage et/ou du signal de parole synthétisé en sortie, et dans lequel
la transmission du message textuel est effectuée en réponse à une entrée prédéterminée de l'utilisateur en réponse au message textuel affiché et/ou au signal de parole synthétisé en sortie.

12. Produit de programme informatique, comprenant un ou plusieurs supports pouvant être lus par ordinateur comportant des instructions exécutables par ordinateur dans le but d'exécuter une ou plusieurs des étapes du procédé conforme à l'une des revendications 8 à 11.
